# FASCICULE DE BREVET EUROPEEN

(11) **EP 2 202 023 B1**
(45) Date de publication et mention de la délivrance du brevet: **20.11.2013**
(21) Numéro de dépôt: 09177732.6
(22) Date de dépôt: 02.12.2009
(51) Int. Cl.: B23K 9/028, B23K 26/28, B23K 37/04, B23K 37/047, B23K 37/053, B23Q 1/76, B23Q 3/10, F16C 19/12, B23K 101/12

(54) **Outillage et procédé de positionnement bout à bout de tubes métalliques**
Werkzeug und Verfahren zum Stumpfpositionieren von metallischen Röhren
Tool and process of butt positioning of metallic tubes

(30) Priorité: 19.12.2008 FR 0858812
(43) Date de publication de la demande: 30.06.2010
(73) Titulaire: Cryolor, 57365 Ennery (FR)
(72) Inventeur: Varrassi, Lucien, 57890 Porcelette (FR); Casoni, Gilbert, 8094 Bertrange (LU)
(74) Mandataire: De Cuenca, Emmanuel Jaime

(56) Documents cités:
- EP-A- 0 995 532
- WO-A-01/28724
- JP-A- 10 058 182
- JP-A- 10 279 029
- US-A- 2 733 330
- US-A- 3 963 231
- US-A- 5 904 347
- US-A1- 2003 230 839

## Description

La présente invention concerne un outillage de positionnement conformément au préambule de la revendication 1 (voir, par exemple, JP 10/058182.), et un procédé de positionnement bout à bout de tubes métalliques (utilisant un tel outillage (Rev. 6).

L'invention concerne plus particulièrement un procédé et un outillage pour l'assemblage et le soudage de tubes métalliques de faible épaisseur (épaisseur par exemple de l'ordre de 2 à 3mm). Ces tubes métalliques de faible épaisseur sont parfois désignés par le terme « virole ». Ces tubes sont généralement obtenus par le cintrage d'une feuille métallique parallélépipédique. Deux bords de la feuille métallique sont ensuite soudés pour former un tube cylindrique (la soudure forme ainsi une génératrice du tube). Les tubes sont ensuite soudés bout à bout pour réaliser des réservoirs cryogéniques à double enveloppe (réservoir intérieur ou réservoir extérieur) notamment pour des réservoirs destinés à être disposés sur des semi-remorques de camions. Du fait des grandes dimensions (par exemple diamètres compris entre 1,5 et 3m) de ces tubes et de leur faible épaisseur, ces derniers sont très flexibles. De ce fait, leur manipulation et leur assemblage est relativement complexe.

En effet, une méthode connue consiste à assembler verticalement ces tubes bout à bout. Selon cette méthode, on utilise un système de levage assurant une suspension des tubes. L'opérateur utilise une échelle pour accrocher, souder et décrocher les tubes suspendus.

Cette solution présente des inconvénients parmi lesquels : un travail en hauteur pour les opérateurs, une utilisation d'un système de levage. Lorsque deux ou trois tubes ont été soudés, l'opérateur doit descendre et coucher les tubes assemblés. Cette manipulation est également relativement complexe, dangereuse et peut entraîner une déformation du tube au niveau notamment de son point d'appui.

Le document JP 10 058182 décrit une table de travail pour machine de coupage comprenant une tête laser et de paliers à rouleaux cylindriques.

Le document US 2,733,330 décrit un dispositif de support de pièces à souder comprenant un plateau en V ajustable en hauteur muni de quatre billes rotatives.

Le document US 3,563,231 décrit un système de positionnement de tubes rotatif comprenant des chariots munis de deux bras articulés et comportant chacun un galet rotatif.

Le document EP 995 532 décrit une installation de soudage de deux sous-parties pour réaliser une structure creuse.

Un but de la présente invention est de pallier tout ou partie des inconvénients de l'art antérieur relevés ci-dessus. est defini dans la revendication 1.

Par ailleurs, des modes de réalisation de l'invention peuvent comporter l'une ou plusieurs des caractéristiques suivantes :
- l'outillage comporte au moins un châssis comprenant au moins deux palier, chaque palier comprenant une armature cintrée formant un arc de cercle dont la concavité est orientée vers le haut en position d'utilisation,
- l'outillage comprend en outre d'un châssis distinct pourvu d'un mécanisme d'entraînement en rotation sélectif d'au moins un tube,
- le mécanisme d'entraînement en rotation sélectif d'au moins un tube comprend un système de galets réglables rotatifs destinés à entraîner en rotation un tube par contact avec la surface extérieure dudit tube, les galets étant entraînés en rotation sélectivement par un moteur,
- l'outillage comprend en outre un mécanisme à galets réglables montés fous (libre en rotation) sur un châssis distinct,
- le ou les paliers comprennent une armature cintrée formant un arc de cercle qui s'étend sur un secteur angulaire compris entre 90 et 180 degrés et de préférence compris entre 150 et 180 degrés et encore plus préférentiellement autour de 180 degrés,

L'invention concerne également un procédé de positionnement et d'assemblage bout à bout de plusieurs tubes métalliques pour la fabrication d'un réservoir cryogénique, utilisant un outillage conforme à l'une quelconque des caractéristiques précédentes ou ci-après (voir Revendication 6).

Par ailleurs, des modes de réalisation de l'invention peuvent comporter l'une ou plusieurs des caractéristiques suivantes :
- l'étape de soudure circonférentielle des bordures adjacentes des tubes mis en contact est réalisée par un appareil de soudure situé dans une zone fixe et en ce que les deux tubes mis en contact sont mis en rotation ensemble pour déplacer progressivement les zones à souder vers l'outil de soudage.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue de côté et schématique d'un exemple de réalisation d'un outillage selon l'invention,
- la figure 2 représente une vue de côté et schématique d'un détail d'un outillage selon l'invention illustrant un châssis pourvu de paliers supportant un tube,
- la figure 3 représente une vue de face du détail de la figure 2,
- la figure 4 représente un détail d'un exemple de réalisation d'un outillage selon l'invention illustrant des zones d'appui inférieure de tubes portés par deux châssis adjacents,
- la figure 5 représente un détail d'un exemple de réalisation d'un système de maintien d'un tube dans un palier de l'outillage selon l'invention.

Des exemples non limitatifs de l'outillage selon l'invention vont à présent être décrits en référence aux figures. Tout ou partie des éléments constitutifs des outillages décrits peuvent être utilisés pour assembler aussi bien des tubes destinés à réaliser des réservoirs cylindriques intérieurs que des réservoirs cylindriques extérieurs.

Par ailleurs, une partie seulement des éléments constitutifs des outillages décrits ci-après peuvent être utilisés. De même, d'autres combinaisons d'éléments constitutifs des exemples d'outillages ci-après peuvent être envisagées.

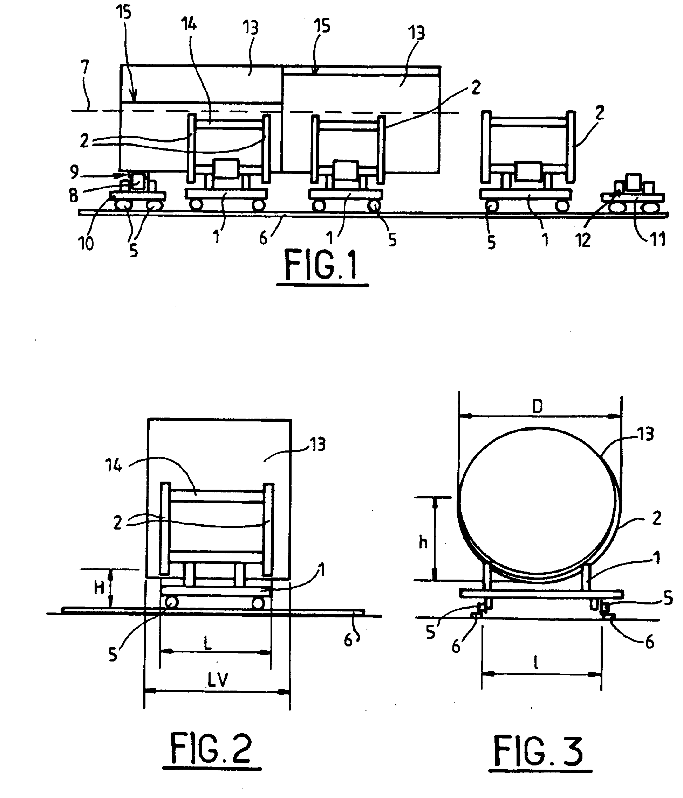

L'outillage représenté à la figure 1 comprend trois châssis 1 portant chacun deux paliers 2 destinés à porter un tube 13 métallique couché en position horizontale.

Chaque palier 2 comporte une armature métallique cintrée formant un arc de cercle dont la concavité est orientée vers le haut en position d'utilisation (cf. figures 1, 2, 3 et 5). Ainsi, chaque palier 2 définit un logement en U destiné à accueillir la surface extérieure cylindrique d'un tube 13 métallique. Les deux paliers 2 portés par un même châssis 1 sont de préférence reliés par une potence longitudinale 14. Bien entendu, le nombre et la structure des paliers 2 sur un châssis 1 peuvent être différents. Les châssis 1 sont de préférence munis de roues 5 guidées dans ou sur des rails 6.

La face des paliers 2 destinée à accueillir la surface d'un tube 13 cylindrique est conformée pour autoriser une rotation contrôlée du tube 13 cylindrique dans le palier 2 autour de l'axe de révolution dudit tube 13. De même, les paliers 2 sont conformés pour autoriser une translation contrôlée du tube 13 cylindrique dans le palier 2 selon l'axe de révolution dudit tube 13.

L'outillage peut comprendre également un châssis 10 supplémentaire pourvu d'un mécanisme 8, 9 d'entraînement en rotation sélectif d'au moins un tube 13. Par exemple, le châssis 10 d'entraînement en rotation peut comporter un système de galets 9 réglables rotatifs destinés à entraîner en rotation un tube 13 par contact avec la surface extérieure dudit tube, les galets 9 étant entraînés en rotation sélectivement par un moteur 8. Bien entendu, le mécanisme 8, 9 d'entraînement en rotation peut être prévu sur un châssis pourvu de paliers 2.

De même, l'outillage peut comprendre également un châssis 11 supplémentaire distinct pourvu d'un mécanisme 12 à galets réglables montés fous (c'est-à-dire libres en rotation).

La hauteur H d'un châssis peut être comprise par exemple entre 0,2 et 0,6m et de préférence de l'ordre de 0,5m. La longueur L du châssis peut être comprise entre 0,5 et 1,5m et de préférence de l'ordre d'1m. La longueur des tubes 13 peut être comprise entre 0,5 et 2,5n et notamment de l'ordre de 1,5 m. Le diamètre D des tubes peut être compris entre 1 et 3m (le diamètre ou l'écartement des paliers correspond à cette dimension). La hauteur h des paliers 2 est de préférence de l'ordre de la moitié du diamètre D du tube 13.

De préférence les paliers 2 décrivent des arcs de cercles présentent une ouverture de l'ordre de 180° (cf. figure 3).

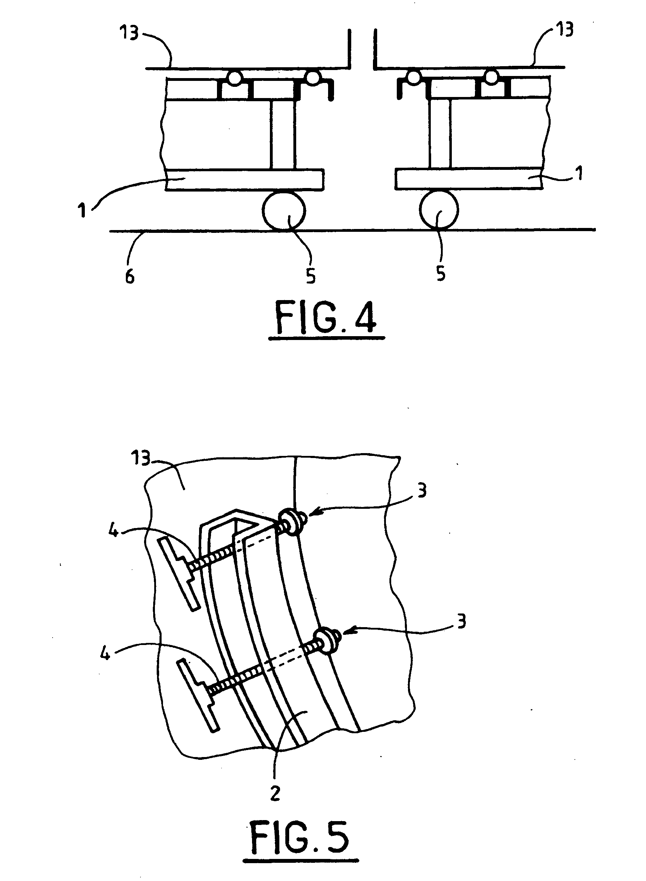

La face des paliers 2 destinée accueillir un tube 13 cylindrique est conformée pour ne présenter que des points de contacts localisés et de surface réduite (contacts ponctuels ou lignes de contact avec la surface du tube 13). Les paliers 2 peuvent comporter une pluralité de roulements 3 assurant le contact avec les tubes 13. Comme représenté à la figure 5, les roulements peuvent comporter des roulements 3 à sphère rotative pouvant tourner selon au moins deux axes distincts (et de préférence selon toutes les directions possibles) pour permettre les mouvements de rotation et de translation contrôlés des tubes 13 relativement au palier 2.

Avantageusement, au moins une partie des roulements 3 sont montés sur des supports 4 sélectivement déplaçables relativement au palier 2 selon une direction dite radiale c'est-à-dire vers l'intérieur ou vers l'extérieur du logement formé par le palier 2. De cette façon, l'outillage permet de réaliser un ajustement radial du palier 2 au diamètre des tubes 13. Par exemple, comme représenté à la figure 5, les roulements 3 de contact sont montés sur des tiges 4 filetées coopérant avec des taraudages formés dans le palier 2.

On comprend sans peine que l'outillage modulable permet d'assembler des tubes 13 de façon horizontale. L'outillage assure une plus grande sécurité en éliminant les travaux en hauteur. L'outillage permet ainsi de s'affranchir d'un système de levage et permet une économie de temps dans la fabrication de réservoirs.

L'outillage permet de joindre bout à bout des tubes en vue de leur soudure.

L'outillage permet à l'opérateur de mettre en contact facilement les extrémités circulaires de deux tubes 13. La rotation relative des tubes 13 selon leurs axes de révolution peut permettre de disposer facilement les soudures 15 longitudinales des tubes 13 selon des axes respectifs déterminés. La rotation du ou des tubes 13 peut être assurée notamment par le châssis 10 pourvu d'un mécanisme de rotation motorisé.

Lorsque les tubes 13 sont mis en contact dans la position angulaire requise, l'opérateur peut souder les tubes 13 bord à bord. Lors de cette soudure, les deux tubes 13 peuvent être mis en rotation ensemble pour amener la zone à souder au niveau de l'opérateur (à l'aide par exemple du châssis motorisé 10 et du châssis 11 avec système de rotation libre).

Tout ou partie des châssis 1, 10, 11 comporte un mécanisme de freinage pour empêcher le ou les tubes 13 de tourner ou d'avancer lorsque cela n'est pas requis (via une butée ou un patin de freinage par friction par exemple).

La figure 4 illustre un détail dans lequel un premier tube 13 (à gauche) peut être bloqué longitudinalement et entraîné en rotation par un mécanisme à galets tandis que le second tube 13 est porté par un châssis muni d'un système de freinage pour bloquer sélectivement la rotation du tube 13.

L'ajustement des deux tubes 13 peut ainsi être réalisé avec précision et sans effort. Tous assemblages peuvent être réalisés au niveau du sol.

## Revendications

1. Outillage de positionnement bout à bout de tubes métalliques pour la fabrication de réservoirs cryogéniques, comprenant au moins un châssis (1) portant au moins un palier (2), en position d'utilisation de l'outillage le palier (2) formant un logement orienté vers le haut et présentant un axe longitudinal (7) horizontal pour supporter et guider un tube cylindrique disposé horizontalement sur le au moins un palier (2), le ou les paliers comprenant une armature cintrée formant un arc de cercle qui s'étend sur un secteur angulaire compris entre 150 et 180 degrés et de préférence 180 degrés, la face du au moins un palier (2) destinée à accueillir un tube cylindrique comprenant au moins un organe (3) de support mobile pour autoriser une rotation contrôlée du tube cylindrique dans le palier (2) autour de l'axe de révolution dudit tube, **caractérisé en ce que** l'outillage comportant plusieurs châssis (1) indépendants portant chacun au moins un palier (2), **en ce que** la face du au moins un palier (2) destinée à accueillir un tube cylindrique comprend en outre au moins un organe (3) de support mobile autorisant une translation contrôlée du tube cylindrique dans le palier (2) selon l'axe longitudinal (7) et **en ce que** la face destinée à accueillir un tube cylindrique du au moins un palier (2) comporte des roulements (3) prévus pour former des contacts ponctuels sur la surface extérieure cylindrique d'un tube et **en ce que** les roulements (3) sont prévus pour autoriser des mouvements de rotation et de translation contrôlés des tubes relativement au palier (2), les roulements comprenant des sphères rotatives logées dans des supports respectifs et formant chacune un roulement multidirectionnel, c'est-à-dire une liaison rotule autorisant les sphères à tourner selon trois directions distinctes, **en ce qu'**il comporte des rails (6) fixés au sol, les châssis (1) comportant une base inférieure munie de roues (5), **en ce que** les roue (5) sont guidées dans les rails (6), les rails (6) et les roues (5) étant orientés de façon à permettre la translation horizontale des châssis (1) pour déplacer les tubes selon l'axe longitudinal (7), , et **en ce que** chaque châssis (1) étant destiné à supporter un unique tube respectif d'une pluralité de tubes à assembler, l'un au moins du ou des châssis comprend un mécanisme de frein pour bloquer sélectivement l'avancement d'un tube ou la rotation d'un tube autour de son axe de révolution.

2. Outillage selon la revendication 1 **caractérisé en ce qu'**il comporte au moins un châssis (1) comprenant au moins deux palier (2), chaque palier (2) comprenant une armature cintrée formant un arc de cercle dont la concavité est orientée vers le haut en position d'utilisation.

3. Outillage selon l'une quelconque des revendications 1 ou 2 **caractérisé en ce qu'**il comprend en outre un châssis (10) distinct pourvu d'un mécanisme (8, 9) d'entraînement en rotation sélectif d'au moins un tube.

4. Outillage selon la revendication 3 **caractérisé en ce que** le mécanisme (8, 9) d'entraînement en rotation sélectif d'au moins un tube comprend un système de galets (9) réglables rotatifs destinés à entraîner en rotation un tube par contact avec la surface extérieure dudit tube, les galets (9) étant entraînés en rotation sélectivement par un moteur (8).

5. Outillage selon l'une quelconque des revendications 1 à 4 **caractérisé en ce qu'**il comprend en outre un mécanisme (12) à galets réglables montés fous (libre en rotation) sur un châssis (11) distinct.

6. Procédé de positionnement et d'assemblage bout à bout de plusieurs tubes métalliques pour la fabrication d'un réservoir cryogénique, **caractérisé en ce qu'**il utilise un outillage conforme à l'une quelconque des revendications précédentes, l'outillage comprenant au moins deux châssis (1) distincts comportant chacun au moins un palier (2), le procédé comportant :
- une étape dans laquelle des tubes métalliques respectifs sont disposés horizontalement dans les paliers de châssis (1) distincts,
- une étape de rapprochement des châssis (1) distincts en vue de rapprocher deux tubes adjacents,
- une étape de positionnement et de mise en contact des extrémités de deux tubes adjacents par la rotation relative des tubes autour de leurs axes de révolution et par la translation relative des axes selon l'axe longitudinal (7),
- une étape de soudure circonférentielle des bordures adjacentes des tubes mis en contact.

7. Procédé de positionnement et d'assemblage selon la revendication 6, **caractérisé en ce que** l'étape de soudure circonférentielle des bordures adjacentes des tubes mis en contact est réalisée par un appareil de soudure situé dans une zone fixe et **en ce que** les deux tubes mis en contact sont mis en rotation ensemble pour déplacer progressivement les zones à souder vers l'outil de soudage.

## Patentansprüche

1. Werkzeug zum Positionieren von metallischen Rohren Ende an Ende für die Herstellung von Kryotanks, umfassend mindestens ein Gestell (1), das mindestens ein Lager (2) trägt, wobei das Lager (2) in Verwendungsposition des Werkzeugs eine Aufnahme bildet, die nach oben gerichtet ist und eine horizontale Längsachse (7) aufweist, um ein zylindrisches Rohr in Anordnung in horizontaler Richtung auf dem mindestens einen Lager (2) zu tragen und zu führen, wobei das oder die Lager eine bogenförmige Armierung umfasst bzw. umfassen, die einen Kreisbogen bildet, der sich in einem Winkelsektor zwischen 150 und 180 Grad und vorzugsweise 180 Grad erstreckt, wobei die Fläche des mindestens einen Lagers (2), die für die Aufnahme eines zylindrischen Rohrs bestimmt ist, mindestens ein bewegliches Stützorgan (3) umfasst, um eine kontrollierte Drehung des zylindrischen Rohrs in dem Lager (2) um die Rotationsachse des Rohrs zu gestatten, **dadurch gekennzeichnet, dass** das Werkzeug mehrere unabhängige Gestelle (1) aufweist, die jeweils mindestens ein Lager (2) tragen, dass die Fläche des mindestens einen Lagers (2), die für die Aufnahme eines zylindrischen Rohrs bestimmt ist, ferner mindestens ein bewegliches Halteorgan (3) umfasst, um eine kontrollierte Verschiebung des zylindrischen Rohrs in dem Lager (2) in der Längsachse (7) zu gestatten, und dass die Fläche des mindestens einen Lagers (2), die für die Aufnahme eines zylindrischen Rohrs bestimmt ist, Wälzlager (3) aufweist, die vorgesehen sind, punktförmige Kontakte auf der äußeren zylindrischen Fläche eines Rohrs zu bilden, und dass die Wälzlager (3) vorgesehen sind, kontrollierte Rotations- und Verschiebungsbewegungen der Rohre relativ zu dem Lager (2) zu gestatten, wobei die Wälzlager drehbare Kugeln umfassen, die in jeweiligen Halterungen aufgenommen sind und jeweils ein multidirektionales Wälzlager bilden, das heißt, eine Gelenkverbindung, die es den Kugeln gestattet, sich in drei unterschiedlichen Richtungen zu drehen, dass es am Boden befestigt Schienen (6) aufweist, wobei die Gestelle (1) eine untere Basis aufweisen, die mit Rädern (5) versehen ist, dass die Räder (5) in den Schienen (6) geführt werden, wobei die Räder (5) und die Schienen (6) so ausgerichtet sind, dass sie die horizontale Verschiebung der Gestelle (1) ermöglichen, um die Rohre in der Längsachse (7) zu bewegen, und dass jedes Gestell (1) dafür bestimmt ist, ein jeweiliges einziges Rohr aus einer Vielzahl von zu verbindenden Rohren zu halten, wobei eines mindestens des oder der Gestelle einen Bremsmechanismus umfasst, um selektiv die Vorwärtsbewegung eines Rohrs oder die Drehung eines Rohrs um seine Rotationsachse zu sperren.

2. Werkzeug nach Anspruch 1, **dadurch gekennzeichnet, dass** es mindestens ein Gestell (1) aufweist, das mindestens zwei Lager (2) umfasst, wobei jedes Lager (2) eine bogenförmige Armierung umfasst, die einen Kreisbogen bildet, dessen Konkavität in Verwendungsposition nach oben gerichtet ist.

3. Werkzeug nach einem der Ansprüche 1 oder 2, **dadurch gekennzeichnet, dass** es ferner ein anderes Gestell (10) umfasst, das mit einem Mechanismus (8, 9) versehen ist, um selektiv mindestens ein Rohr zur Drehung anzutreiben.

4. Werkzeug nach Anspruch 3, **dadurch gekennzeichnet, dass** der Mechanismus (8, 9), um selektiv mindestens ein Rohr zur Drehung anzutreiben, ein System von drehbaren, verstellbaren Rollen (9) aufweist, die dazu bestimmt sind, ein Rohr durch Kontakt mit der äußeren Fläche des Rohrs zur Drehung anzutreiben, wobei die Rollen (9) durch einen Motor (8) selektiv zur Drehung angetrieben werden.

5. Werkzeug nach einem der Ansprüche 1 bis 4, **dadurch gekennzeichnet, dass** es ferner einen Mechanismus (12) mit verstellbaren Rollen umfasst, die beweglich (frei drehbar) an einem anderen Gestell (11) montiert sind.

6. Verfahren zum Positionieren und Verbinden von mehreren metallischen Rohren Ende an Ende für die Herstellung eines Kryotanks, **dadurch gekennzeichnet, dass** es ein Werkzeug nach einem der vorhergehenden Ansprüche verwendet, wobei das Werkzeugs mindestens zwei unterschiedliche Gestelle (1) umfasst, die jeweils mindestens ein Lager (2) aufweisen, wobei das Verfahren Folgendes umfasst:
- einen Schritt, in dem die jeweiligen metallischen Rohre in horizontaler Richtung in den unterschiedlichen Lagern von Gestellen (1) angeordnet werden,
- einen Schritt des Heranführens der unterschiedlichen Gestelle (1), um zwei aneinander anstoßende Rohre aneinander heranzuführen,
- einen Schritt des Positionierens und des Inkontaktbringens der Enden von zwei aneinander anstoßenden Rohren durch relative Drehung der Rohre um ihre Rotationsachsen und durch relative Verschiebung der Achsen in der Längsachse (7),
- einen Schritt des Umfangsschweißens der aneinander anstoßenden Ränder der in Kontakt gebrachten Rohre.

7. Verfahren zum Positionieren und Verbinden nach Anspruch 6, **dadurch gekennzeichnet, dass** der Schritt des Umfangsschweißens der aneinander anstoßenden Ränder der in Kontakt gebrachten Rohre durch ein Schweißgerät realisiert wird, das sich in einer ortsfesten Zone befindet, und dass die zwei in Kontakt gebrachten Rohre gemeinsam in Drehung versetzt werden, um die zu schweißenden Zonen progressiv zu dem Schweißgerät hin zu bewegen.

## Claims

1. Tool for end-to-end positioning of metallic tubes for the manufacture of cryogenic reservoirs, comprising at least one frame (1) supporting at least one bearing block (2), in the position of use of the tool the bearing block (2) forming an upwardly directed housing and having a horizontal longitudinal axis (7) for supporting and guiding a cylindrical tube located horizontally on the at least one bearing block (2), the bearing block or blocks comprising a curved reinforcement forming an arc of a circle which extends over an angle segment of between 150 and 180 degrees and preferably 180 degrees, the surface of the at least one bearing block (2) intended to accommodate a cylindrical tube comprising at least one movable support means (3) for allowing controlled rotation of the cylindrical tube in the bearing block (2) about the rotation axis of said tube, **characterised in that** the tool comprises a plurality of independent frames (1) each supporting at least one bearing block (2), **in that** the surface of the at least one bearing block (2) intended to accommodate a cylindrical tube further comprises at least one movable support means (3) permitting controlled translation of the cylindrical tube in the bearing block (2) along the longitudinal axis (7), and **in that** the surface intended to receive a cylindrical tube of the at least one bearing block (2) comprises roller bearings (3) provided in order to form points of contact on the outer cylindrical surface of a tube, and **in that** the roller bearings (3) are provided in order to allow controlled movements of rotation and translation of the tubes relative to the bearing block (2), the roller bearings comprising rotatable spheres housed in respective supports and each forming a multidirectional roller bearing, i.e. a swivel joint allowing the spheres to rotate in three separate directions, **in that** it comprises rails (6) fixed to the ground, the frames (1) comprising a lower base equipped with wheels (5), **in that** the wheels (5) are guided in the rails (6), the rails (6) and the wheels (5) being oriented so as to allow the horizontal translation of the frames (1) in order to move the tubes along the longitudinal axis (7), and **in that** each frame (1) is intended to support a single respective tube of a plurality of tubes that are to be assembled, at least one of the frame or frames comprises a braking mechanism for selectively blocking the advance of a tube or the rotation of a tube about its rotation axis.

2. Tool according to claim 1, **characterised in that** it comprises at least one frame (1) comprising at least two bearing blocks (2), each bearing block (2) comprising a curved reinforcement forming an arc of a circle, the concave portion of which is oriented upwards in the position of use.

3. Tool according to any one of claims 1 or 2, **characterised in that** it further comprises a separate frame (10) provided with a mechanism (8, 9) for selectively driving at least one tube in rotation.

4. Tool according to claim 3, **characterised in that** the mechanism (8, 9) for selectively driving at least one tube in rotation comprises a system of adjustable rotary rollers (9) intended to drive a tube in rotation by contact with the outer surface of said tube, the rollers (9) being selectively driven in rotation by a motor (8).

5. Tool according to any one of claims 1 to 4, **characterised in that** it further comprises a mechanism (12) with adjustable rollers mounted loosely (so as to be freely rotatable) on a separate frame (11).

6. Method for end-to-end positioning and assembly of a plurality of metallic tubes for the manufacture of a cryogenic reservoir, **characterised in that** it uses a tool according to any one of the preceding claims, the tool comprising at least two separate frames (1) each having at least one bearing block (2), the method comprising:
- a step in which respective metallic tubes are disposed horizontally in the bearing blocks of separate frames (1),
- a step of bringing separate frames (1) together with a view to bringing two adjacent tubes together,
- a step of positioning and contacting the ends of two adjacent tubes by the relative rotation of the tubes about their rotation axes and by relative translation of the axes along the longitudinal axis (7),
- a step of circumferential welding of the adjacent edges of the tubes brought into contact.

7. Method for positioning and assembly according to claim 6, **characterised in that** the step of circumferential welding of the adjacent edges of the tubes brought into contact is carried out by means of a welding apparatus located in a fixed zone and **in that** the two tubes brought into contact are set rotating together so as progressively to move the zones that are to be welded towards the welding tool.
